# EUROPEAN PATENT APPLICATION

(11) **EP 2 784 790 A1**
(43) Date of publication of application: **01.10.2014**
(21) Application number: 13161665.8
(22) Date of filing: 28.03.2013
(51) Int. Cl.: H01F 27/14, H01F 27/40

(54) **Pressure relief device for a power transformer, and related power transformer**

(71) Applicant: ABB Technology AG, 8050 Zürich (CH)
(72) Inventor: Tonin, Andrea, 36070 Brogliano (VI) (IT); Carollo, Carlo, 36016 Thiene (VI) (IT); Ramponi, Emanuele, 36071 Arzignano (VI) (IT)
(74) Representative: De Santis, Giovanni

(57) **Abstract**

A pressure relief device for a power transformer having a tank filled with an insulating fluid, the pressure relief device comprising a shaped body suitable to be connected at an opening of the tank, and a valve-like element which is displaceable between a first position where it is suitable to close the opening of the tank and a second position where it is spaced away from the opening when the pressure inside the tank reaches a predefined operating threshold value. The pressure relief device further comprises:
- a pressure transducer which is operatively associated with said shaped body and is adapted to continuously sense the pressure inside said tank;
- an electronic circuit which receives signals from the pressure transducer; and
- means for setting a desired alarm threshold corresponding to a pressure inside the tank below the operating threshold value.

## Description

The present disclosure relates to a pressure relief device suitable to be connected to a power transformer, and to a power transformer comprising such a pressure relief device.

As known, certain types of power transformers comprise a closed tank or vessel which is filled with an insulating fluid, e.g. a mineral oil; this fluid is used as a coolant for the components of the transformer which are immersed therein, namely core and windings. During operations, it is possible that some failures or disturbances may generate accidental and uncontrolled increases of pressure inside the closed tank; for example, sudden and violent short-circuits inside the tank almost instantly generate an enormous amount of gas with a great increase of the internal pressures.

When the pressure inside the tank exceeds a predefined limit ruled by international standards, e.g. rule EN 50216, there is the danger of severe damages for the transformer and even of explosions.

To mitigate such risks, pressure relief devices are used which are designed to discharge the over-pressure outside the tank into the surrounding atmosphere.

Known pressure relief devices are usually connected to a wall of the transformer tank, e.g. on top of the tank, and are available in numerous and various constructive solutions.

Such devices are constructed like an on-off valve with a predefined threshold which is defined by its mechanical design and corresponds to a so-called opening or operating pressure value; in practice, when the level of pressure inside the tank reaches this critical value, the valve mechanically opens and discharges to the exterior, in a very short time period, pressure increases that have taken place in the tank.

Although known pressure relief devices perform their basic functions in a quite satisfying way, there is still room for further improvements.

For example, currently it is not possible to have any information about the actual pressure value and the trend over the time of the inside pressure but it is known that the inside pressure sometimes might increase at a slow pace and not suddenly.

Relevant standards state that a pressure relief device has to withstand a pressure 10 kPa less than the nominal operating pressure without any oil leakage; this means that the pressure inside the tank can be higher than the rated pressure without any information outside.

In addition, as indicated above, actual pressure relief devices work purely as mechanical on-off valves just opening when the internal pressure reaches the operating pressure value and then reclosing after the overpressure is discharged outside.

Hence, the present disclosure relates to an improved pressure relief device for a power transformer having a tank filled with an insulating fluid, the pressure relief device comprising a shaped body suitable to be connected at an opening of said tank, and a valve-like element which is displaceable between a first position where it is suitable to close said opening of the tank and a second position where it is spaced away from said opening when the pressure inside the tank reaches a predefined operating threshold value; **characterized in that** it comprises:
- a pressure transducer which is operatively associated with said shaped body and is adapted to continuously sense the pressure inside said tank;
- an electronic circuit which receives signals from said pressure transducer; and
- means for setting a desired alarm threshold corresponding to a pressure inside the tank below said operating pressure threshold value.

Detailed characteristics and advantages will become apparent from the description of some preferred but not exclusive embodiments of a pressure relief device according to the present disclosure, illustrated only by way of non-limitative examples with the accompanying drawings, wherein:
figure 1 is a perspective view illustrating an exemplary embodiment of a pressure relief device according to the present disclosure;
figure 2 is a perspective view schematically illustrating an exemplary embodiment of some parts of a pressure relief device according to the present disclosure;
figure 3 is a perspective view showing a pressure relief device according to the present disclosure with some components partially cut and schematically connected to a tank of a power transformer;
figure 4 is a perspective view showing a further embodiment of a pressure relief device according to the present disclosure with some components partially cut;
figure 5 is a block diagram schematically representing an electronic circuit and setting means used in a pressure relief device according to the present disclosure.

It should be noted that in the detailed description that follows, identical or similar components have the same reference numerals, regardless of whether they are shown in different embodiments of the present disclosure. It should also be noted that in order to clearly and concisely disclose the present disclosure, the drawings may not necessarily be to scale and certain features of the present disclosure may be shown in somewhat schematic form.

Finally, when the term "adapted" or "arranged" or "configured" or "shaped", is used herein while referring to any component as a whole, or to any part of a component, or to a whole combinations of components, or even to any part of a combination of components, it has to be understood that it means and encompasses correspondingly either the structure, and/or configuration and/or form and/or positioning of the related component or part thereof, or combinations of components or part thereof, such term refers to.

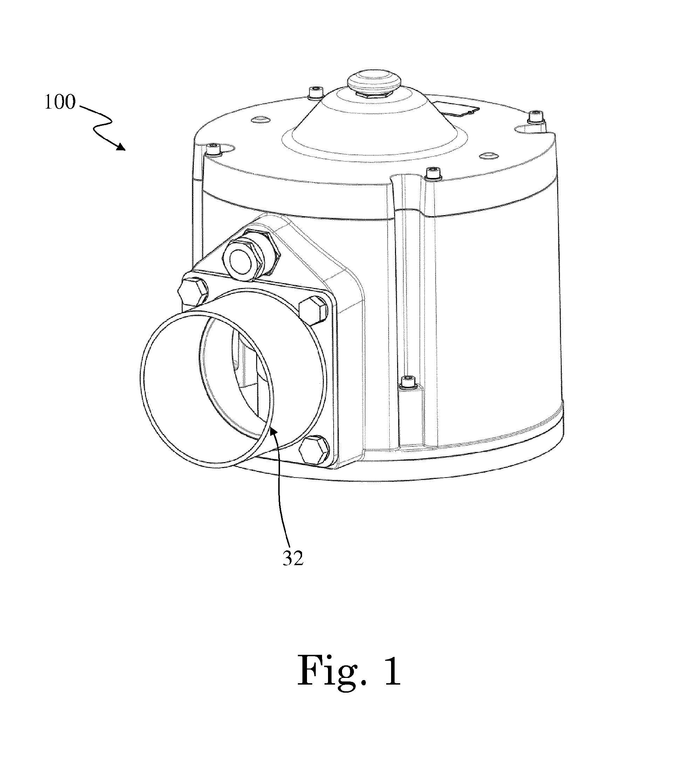

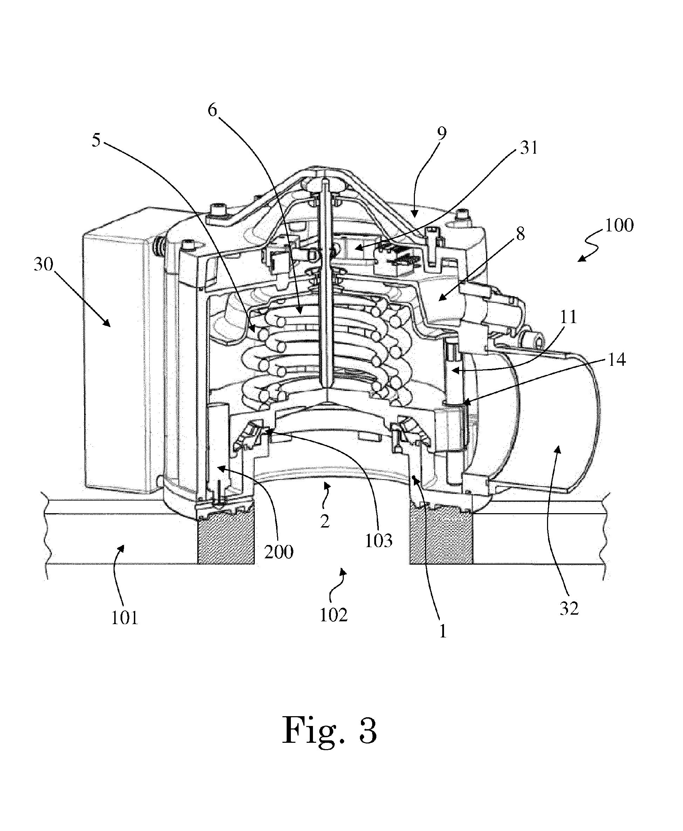

Figures 1-4 show exemplary embodiments of a pressure relief device according to the present disclosure globally indicated by the reference number 100; the pressure relief device 100 is suitable to be connected to a power transformer, for example to the tank or casing of the transformer, as shown schematically in figure 3 wherein a top wall of a tank is schematically represented by the reference number 101.

In particular, the pressure relief device 100 comprises a shaped body suitable to be connected at an opening 102 of the tank and comprises a structure provided with a valve-like element 4 which is designed so as the valve-like element 4 is displaceable between a first position where it is suitable to close the opening 102 of the tank and a second position where it is spaced away from the opening 102 when the pressure inside the tank reaches a predefined operating pressure threshold value. In practice, the predefined operating pressure threshold is a predefined value at which the pressure inside the tank causes the valve-like element 4 to be displaced away from the opening 102, thus allows discharging outside the tank.

Clearly, the pressure relief device 100 can be connected at any other opening of any other suitable part or wall of the transformer or to any other component thereof, such as for example an on-load tap changer.

On the market there are possible several different constructive solutions for achieving such technical result; in the exemplary embodiments illustrated, the pressure relief device 100 has a shaped body comprising several parts mutually assembled to each other in the way that will be described hereinafter.

In particular, the shaped body comprises a connection flange 1 provided with a through opening 2 corresponding to the opening of the tank 102 when the pressure relief device 100 is mounted on the tank; the connection flange 1 is suitable to be connected to the tank, e.g. to the top wall 101 of the tank, by using securing means e.g. screws inserted into holes 15.

The shaped body of the exemplary pressure relief device 100 comprises an end or abutment cap 3 which is spaced apart from the connection flange 1, e.g. above the connection flange 1 and externally with respect to the tank of the transformer; in the exemplary embodiment illustrated, the end cap 3 has a substantially circular, cup-shaped configuration.

The valve-like element 4 comprises, as for example illustrated in figure 3, a substantially disk-like body (seen in top or plan view) and is positioned displaceable between the connection flange 1 and the end cap 3; the valve element 4 is displaceable between a first position where it is suitable to close the through opening 2 (closed position illustrated in figure 1 which is always assumed by the device when the pressure inside the tank is below the operating pressure threshold value) and a second position where it is spaced away from the through opening 2 (open position assumed when and until the pressure inside the tank is equal to or higher than the operating threshold value) so as to allow venting outside the tank of any dangerous overpressure occurring for whatever reason inside the tank itself.

Further, the exemplary pressure relief device 100 illustrated in the figures comprises at least one elastic element 5, e.g. a spring 5, which is operatively connected to the valve element 4 so as to urge it towards the first open position where it is devised to close the through opening 2 of the connection flange 1; to this end, in order to sealingly close the through opening 2, the device 100 is provided with suitable gaskets 103 according to solutions well known to those skilled in the art and therefore not described herein in details.

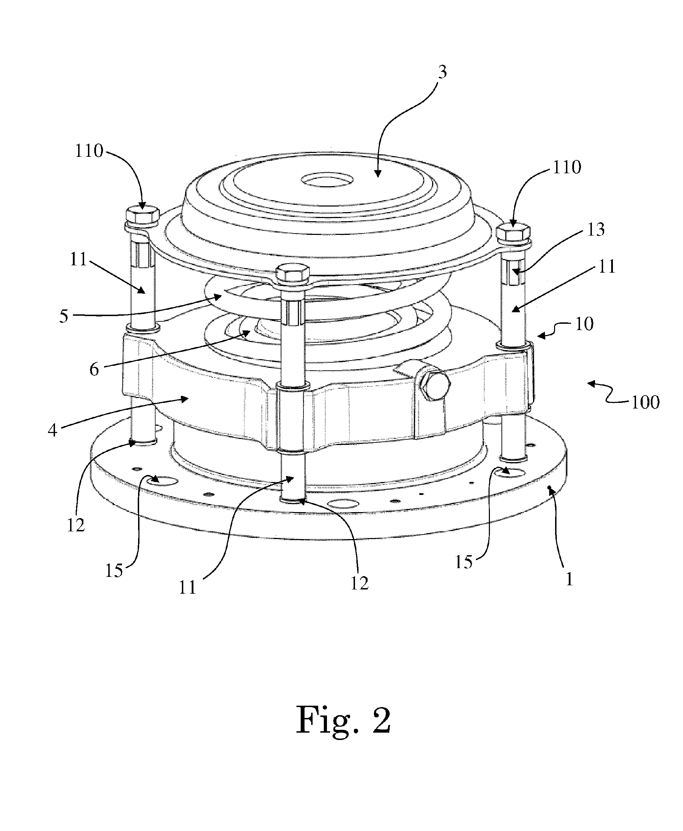

In the exemplary embodiments illustrated in figures 2-4, the pressure relief device 100 is shown provided with two elastic elements, i.e. two springs 5 and 6, e.g. two compression springs, which are for instance positioned concentrically to each other; each spring 5, 6, has one end which is operatively connected to the end cap 3 and is placed within the concavity of its cup-shaped body, and the other end which is operatively connected to the valve element 4 so as to urge it towards the connection flange 1 for closing its through opening 2.

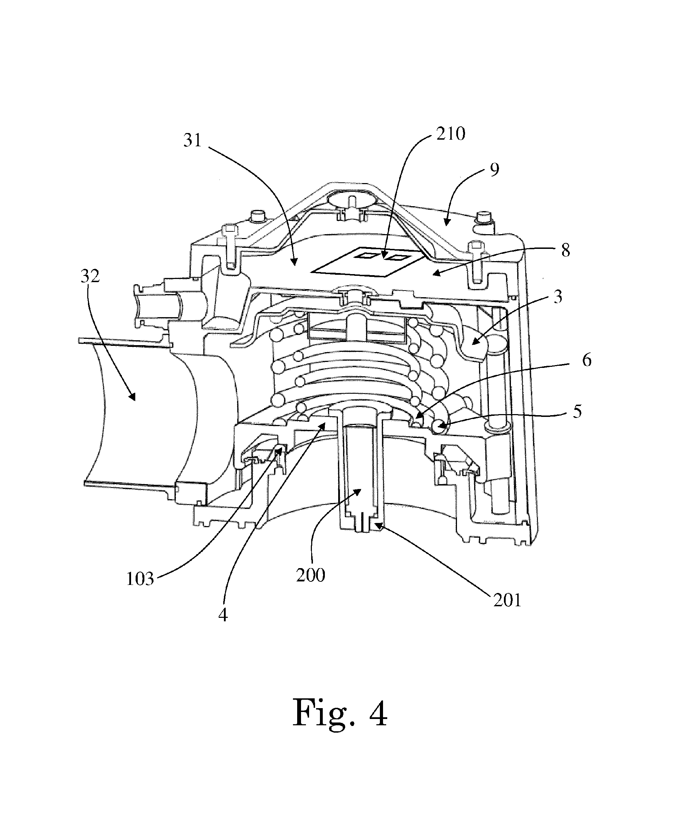

As illustrated in figures 3 and 4, the exemplary shaped body of the device 100 comprises also an intermediate cover 8 positioned above the end cap 3, and an outer cover 9 which is positioned over the intermediate cover 8; the intermediate cover 8 and the outer cover 9 delimit an inside closed space 31 inside which it is possible to house components, such as electric cables, terminal, switches, et cetera.

The valve element 4 is guided by connection means 10 which comprise, according to the exemplary embodiments illustrated in the attached figures, first connection means which mechanically connect the connection flange 1 with the end cap 3 and second connection means operatively connecting the valve element 4 with the first connection means, in the way that will be described hereinafter.

The first connection means comprise for example a plurality of substantially rectilinear studs 11, for instance four studs 11; each stud 11 has one end portion 12 which is inserted into a corresponding hole provided on the connection flange 1 and is connected to the flange 1 by means of securing means, e.g. fixing screws. A second end portion 13 of each stud 11 is connected to the end cap 3, by using other securing means, e.g. a further screw 110.

The second connection means comprise for instance a plurality of sleeves 14 which are inserted into corresponding seats provided on the body of the valve element 4.

In turn, each stud 11 is inserted and passes through an associated sleeve 14; in particular, each stud 11 is inserted into the associated sleeve 14, e.g. with a small mechanical clearance left there between so as to allow the movement of the valve element 4 relative to the studs 11 themselves (and hence relative to the end cap 3 and connection flange 1 as well which are rigidly connected with the studs 11).

As shown in figures 1, 3 and 4, the body of the device 100 can be provided also with a lateral sleeve 32 which can be realized in a unique piece together with the intermediate cover 8 or can be mechanically connected therewith. The lateral sleeve 32 allows oil leaking outside the tank 101.

The pressure relief device 100 according to the present disclosure comprises also a pressure transducer 200 which is operatively associated, e.g. mechanically connected, to the shaped body and is adapted to continuously sense the pressure inside the tank, and an electronic circuit 210, e.g. an electronic board or PCB, which receives signals from the pressure transducer.

For example, the pressure transducer 200 can be connected externally to the shaped body and can be put in fluid communication with the inside of the tank through a suitable conduit. Preferably the pressure transducer 200 is positioned inside the shaped body of the device 100 itself.

In a first exemplary embodiment illustrated for example in figure 3, the pressure transducer 200 is positioned at the connection flange 1 and is in operative communication with the inside of the tank 101.

In the exemplary embodiment illustrated in figure 4, the pressure relief device 100 comprises a sleeve 201 which is operatively connected to the valve element 4 at a central portion thereof; the pressure transducer 200 is positioned inside the sleeve 201 and is in operative communication with the inside of the tank 101.

Alternatively, the pressure transducer 200 can be fitted inside the concentric springs 5 and 6. Preferably, the pressure transmitter 200 is adapted to convert the pressure sensed into corresponding electronic signals.

In turn, the electronic circuit 210 can be positioned inside the space 31 between the two covers 8 and 9 as illustrated in figure 3.

Alternatively, as also illustrated in figure 3, the pressure relief device 100 can comprise an electrical box 30 containing the electronic circuit 210 which receives the signals from the pressure transmitter 200.

An electronic unit can be placed remotely from the device 100 and can receive the signals from the pressure transducer 200.

Advantageously, the pressure relief device 100 according to the present disclosure comprises setting means, indicated schematically with the global reference 300, for setting a desired alarm threshold corresponding to a pressure inside the tank, sensed by the pressure transducer 200, below the operating pressure threshold value.

Preferably, the setting means 300 are configured to selectively adjust the alarm threshold; in this way it is possible to set a desired alarm threshold case by case, for instance depending on the specific needs of the application/customer.

Alternatively, instead of having different alarm thresholds selectable case by case, it is possible to have setting means 300 which set only a unique alarm threshold value corresponding to a pressure inside the tank below the operating pressure threshold value.

In particular, according to a first embodiment, the setting means 300 can be configured to be actuated locally, e.g. by intervening directly on the pressure relief device 100 itself; alternatively, the setting means 300 are configured to be actuated remotely, or both ways.

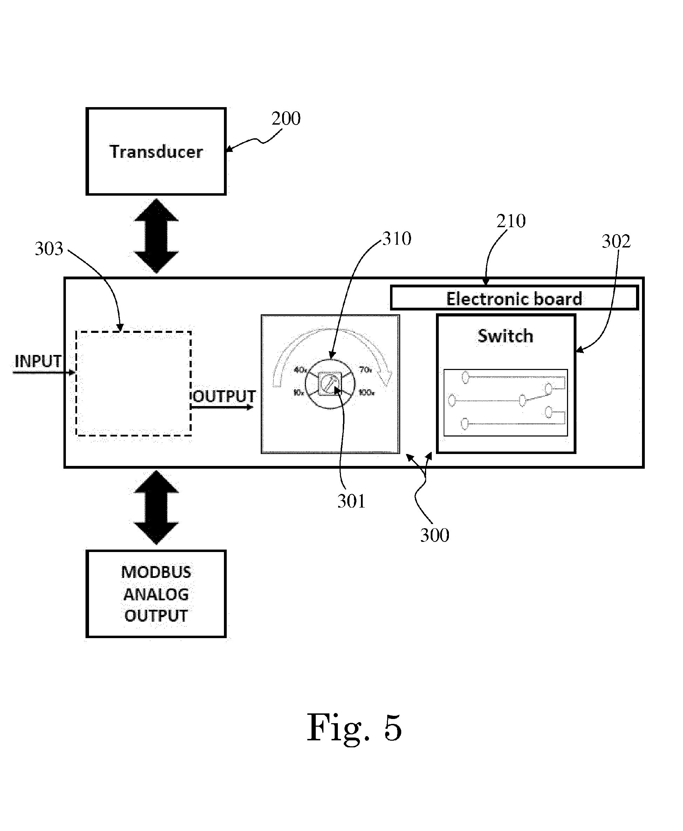

In the exemplary embodiment illustrated in figure 5, the setting means 300 comprise a selector 301 which is operatively associated to the electronic circuit 210 and is movable relative to a reference scale 310.

In particular, as illustrated in figure 5 the setting means 300 comprise a trimmer 301 which is operatively associated, e.g. mounted on, the electronic circuit 210 and is movable, for instance rotatable, relative to a reference scale 310.

The reference scale 310 is for instance drafted on the electronic circuit 210 and in the example illustrated has some values, e.g. 10%, 40%, 70%, expressed as a percentage of the operating pressure threshold value (100%) at which the device 100 must mechanically open in order to allow discharging outside internal overpressures.

In addition, the setting means 300 comprise also a switch 302 operatively connected to the selector 301; such switch 302 is provided so as a user can exploit it and transform the alarm threshold in any suitable alarm signal. For example, the switch 302 can be connected to an acoustic signal, or to a lamp in order to acoustically or visually warm that the pressure inside the tank has reached the level of the alarm threshold.

Alternatively, the setting means 300 comprise a circuit block, schematically represented in figure 5 by the reference number 303, which is preferably provided on the electronic circuit 210 and is configured to receive in input a command signal and to output a signal for setting the desired alarm threshold.

According to solutions readily available to those skilled in the art, such circuit block 303 can be a pure analogic circuit, or can comprise a digital elaboration unit adapted to generate an output signal setting the desired alarm threshold based on a signal received in input. For example, such digital elaboration unit can comprise a DSP or a suitable microprocessor.

The input signal can be generated locally, e.g. the pressure relief device can be provided with a local human machine interface, e.g. an input display, or it can be generated from a remote unit.

In practice, once the pressure relief device 100 is installed and the alarm threshold is set, in normal operating conditions the valve element 4 is urged by the springs 5, 6 toward the connection flange 1 and closes the opening 102. The pressure transducer 200 senses continuously the pressure inside the tank 101 and corresponding signals are received by the electronic circuit 210. Such communication can be executed for example according to MODBUS protocol and by means of an RS 485 connection type and analog output 4-20mA. In this way, it is possible have a continuous information about the pressure exerted on the valve element 4.

If the pressure inside the tank reaches the level corresponding to the alarm threshold preset, a user is warned immediately and therefore can implement any suitable corrective intervention before the pressure inside the tank reaches the critical level corresponding to the operating pressure threshold, e.g. putting the transformer out of work.

When the pressure inside the tank increases and reaches the operating pressure threshold, i.e. the level sufficient enough to overcome the urging force of the springs 5-6, the valve element 4 is moved away by such overpressure towards the end cap 3.

In this way, when the opening 102 is open, fluids coming from the inside of the tank, e.g. gases or even quantities of the coolant liquid are vented/discharged outside, e.g. through the lateral sleeve 32; as a consequence, the pressure inside the tank is lowered and when the force exerted by the springs 5, 6 (which were compressed by the movement of the valve element 4 towards the end cap 3) on the valve element 4 is again higher than the counteracting pressure, the valve element 4 returns to the previous position thus closing again the through opening 102.

In practice, it has been found that the pressure relief device 100 according to the present disclosure offers a solution which is quite simple, reliable, and allows monitoring the pressure inside the tank and warning in advance if the pressure inside the tank is reaching a critical level.

Such results are achieved thanks to a simple solution which makes the pressure relief device 100 according to the present disclosure easy to be used in connection with any type of power transformer, or even components of or for power transformers, such as on-load tap changers, where such safety devices are advisable.

Hence, the present disclosure also encompasses a power transformer comprising at least one pressure relief device 100 of the types previously described and as defined in the appended claims.

Clearly more than one pressure relief device can be used in a single power transformer.

The pressure relief device 100 thus conceived is susceptible of modifications and variations, all of which are within the scope of the inventive concept as defined in particular by the appended claims; any possible combination of the previously disclosed embodiments can be implemented and has to be considered within the inventive concept of the present disclosure; all the details may furthermore be replaced with technically equivalent elements. For example, any of the previously described components may be differently shaped, or used in a different number or parts or elements, or the components previously described can be differently connected with respect to each other.

Also the materials used, so long as they are compatible with the specific use and purpose, as well as the dimensions, may be any according to the requirements and the state of the art.

## Claims

1. A pressure relief device (100) for a power transformer having a tank (101) filled with an insulating fluid, the pressure relief device comprising a shaped body suitable to be connected at an opening (102) of said tank, and a valve-like element (4) which is displaceable between a first position where it is suitable to close said opening (102) of the tank and a second position where it is spaced away from said opening (102) when the pressure inside the tank reaches a predefined operating pressure threshold value; **characterized in that** it comprises:
- a pressure transducer (200) which is operatively associated with said shaped body and is adapted to continuously sense the pressure inside said tank;
- an electronic circuit (210) which receives signals from said pressure transducer; and
- means (300) for setting a desired alarm threshold corresponding to a pressure inside the tank below said operating pressure threshold value.

2. Pressure relief device (100) according to claim 1, wherein said setting means (300) are configured to selectively adjust said alarm threshold.

3. Pressure relief device (100) according to claim 1 or 2, wherein said setting means (300) are configured to be actuated locally.

4. Pressure relief device (100) according to claim 1 or 2, wherein said setting means (300) are configured to be actuated remotely.

5. Pressure relief device (100) according to one or more of the previous claims, wherein said setting means (300) comprises a selector (301) operatively associated to said electronic circuit (301) and movable relative to a reference scale (310).

6. Pressure relief device (100) according to claim 5, wherein said setting means (300) comprise a trimmer (301) operatively associated to said electronic circuit (210) and movable relative to said reference scale (310).

7. Pressure relief device (100) according to one or more of the previous claims, wherein said setting means (300) comprise a switch (302) operatively connected to said selector (301).

8. Pressure relief device (100) according to one or more of the preceding claims, wherein said setting means (300) comprise a circuit block (303) provided on said electronic circuit (210) which is configured to receive in input a command signal and to output a signal for setting said desired alarm threshold.

9. Pressure relief device (100) according to one or more of the previous claims, wherein said pressure transducer (200) is adapted to convert the pressure sensed into an electronic signal.

10. Pressure relief device (100) according to one or more of the previous claims, wherein said pressure transducer (200) is positioned inside said shaped body.

11. A power transformer **characterized in that** it comprises at least one pressure relief device (100) according to one or more of the previous claims.
